# EUROPEAN PATENT SPECIFICATION

(11) **EP 0 580 227 B1**
(45) Date of publication and mention of the grant of the patent: **13.10.1999**
(21) Application number: 93202070.4
(22) Date of filing: 16.07.1993
(51) Int. Cl.: H04N 7/087, H04N 7/16

(54) **Method for the transmission and reception of television signals upon payment**
Methode zur Übertragung und zum Empfang von Fernsehsignalen nach Bezahlung
Méthode de transmission et de réception de signaux de télévision sur paiement

(30) Priority: 22.07.1992 IT TO920625
(43) Date of publication of application: 26.01.1994
(73) Proprietor: SOCIETA ITALIANA PER LO SVILUPPO DELL'ELETTRONICA S.I.SV.EL S.P.A., 10060 None (TO) (IT)
(72) Inventor: Dini, Roberto, I-10098 Rivoli (TO) (IT)

(56) References cited:
- WO-A-90/03706
- AU-A- 611 710
- FR-A- 2 646 260
- IEEE TRANSACTIONS ON CONSUMER ELECTRONICS vol. 33, no. 3, August 1987, NEW YORK US pages 226 - 229 SCHIPPMANN 'A NEW ONE-CHIP DATALINE PROCESSOR FOR THE VIDEO PROGRAMMING SYSTEM (VPS)'
- IEEE TRANSACTIONS ON CONSUMER ELECTRONICS vol. 36, no. 3, August 1990, NEW YORK US pages 744 - 752 PEYRET ET AL. 'SMART CARDS PROViDE VERY HIGH SECURITY AND FLEXIBILITY IN SUBSCRIBERS MANAGEMENT'

## Description

The present invention relates to a method for the transmission and reception of television signals.

It is known that publicity inserts are not liked by the public of television viewers, particularly by those who wish to record a television transmission.

Methods to avoiding recording of undesired publicity inserts are, for example, disclosed in WO-A-9 003 706 and AU-A-611 710.

For some time now the UER (European Union of Radiodiffusion) has been elaborating a standard for an automatic control system of domestic video recorders. The document describing this standard (doc. SPB 459 rev. 2 of January 1992, entitled "Specification of the domestic video programme control system") was approved by the group of technical work that had elaborated it (sub-group V2), and will be placed under the procedure of standardisation ETSI (European Technical Standards Institution).

The Programme Delivery Control System provides two functions:
- the preselection function, i.e. the automatic charging in the memory of the recorder of data on the programs to be recorded, taken from the televideo page;
- the control function of the recording, actuated by way of special signals transmitted in the FIELD BLANKING, that identify the programs transmitted.

The functioning of the system is the following:

The user calls a Televideo page containing the indications of television programs, and marks with a cursor the programs that are desired to be received. The programs are identified by a code transmitted in the actual Televideo page, called PIL (Program Identification Label), normally coinciding with the date and time "nominal" of the transmission. Such code is composed of 20 bit, divided as follows:
- 5 bit: day;
- 4 bit: month;
- 5 bit: time;
- 6 bit: minutes.

The same code is transmitted during the program, or in appropriate data packets of teletext (the so-called 8/30 format 2 packet), or in a edicated line during the field blanking (line 16). This second solution has been adopted by the Germans for some years now, and has been incorporated in the UER standard, that therefore results in being compatible with the only system already existing.

The UER standard allows the broadcaster to identify the publicity insert. It is in fact possible to assign to the publicity an appropriate PIL, being different from that of the program in which it is contained and from those of the adjacent programs. The user, for recording the publicity, should explicitly request permission.

Alternately, the standard foresees the use of particular PIL codes, that do not identify the programs, but have other significances, of which:
- the "recording inhibit/terminate code", that identifies parts of transmissions not being destined to the recording, such code has a value: 00000 1111 11110 111111;
- the "interruption code", that identifies the interruption in the program; such code has the value: 00000 1111 11101 111111.

The first code could be used for marking the publicity insert between the two programs, while the second could be used for marking the publicity insert within a program; which causes a suspension of the recording, that then resumes upon termination of the publicity.

It is clear that broadcasters wouid not use the abovementioned possibilities, inasmuch that it would be against their interests to allow the users to elude the publicity inserts. Therefore in practice it occurs that during the publicity between one program and another the PIL relative to the adjacent program will be transmitted (being or the following or the previous), while in the case of publicity inside a program the PIL of the program itself will continue to be transmitted.

The aim of the present invention is therefore that of indicating a method of transmission and reception of television signals that allow for avoiding the recording of publicity inserts in a secure manner.

In allowing such aims the present invention has as its subject a method as defined by claim 1 and an apparatus as defined by claim 16.

Further aims and advantages of the present invention will result in being clear from the detailed description that follows and annexed drawings, supplied purely as an explanatory and nonlimiting example, wherein;

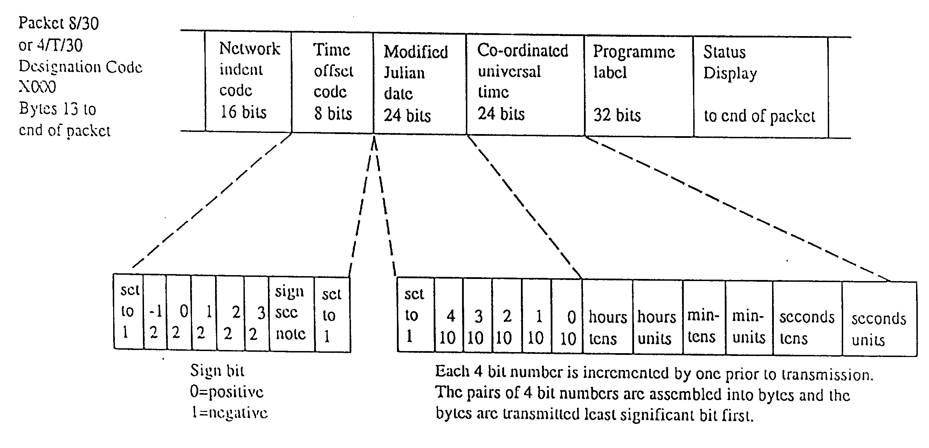

figure 1 represents the structure of the data packet 8/30 format 1;
figure 2 represents the structure of the data packet 8/30 format 2;
figure 3 represents the structure of the Programme Delivery Data in the dedicated line (line 16);
figure 4 represents the block diagram of a receiver of television signals according to the invention;
figure 5 represents the logic flow of the operations carried out by the microprocessor of the receiver according to the invention.

The object of the invention is a pay system that allows the user to exclude the publicity inserts from recordings; it is considered that this system can be accepted by broadcasters, inasmuch they would receive a payment.

For identifying the publicity a bit is obviously sufficient, that needs to be inserted or in the packet 8/30 format 2, or in line 16.

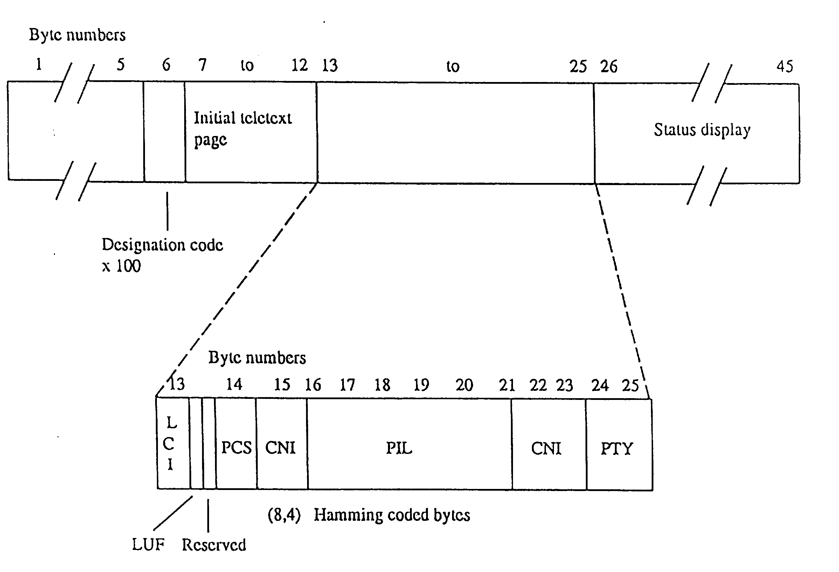

Upon examination of the UER standard, it is noted that in the packet 8/30 a free bit in the byte 13 exists (fig. 2), plus another two free bits in byte 14, destined to the transmission of the PCS (Programme Control Status).

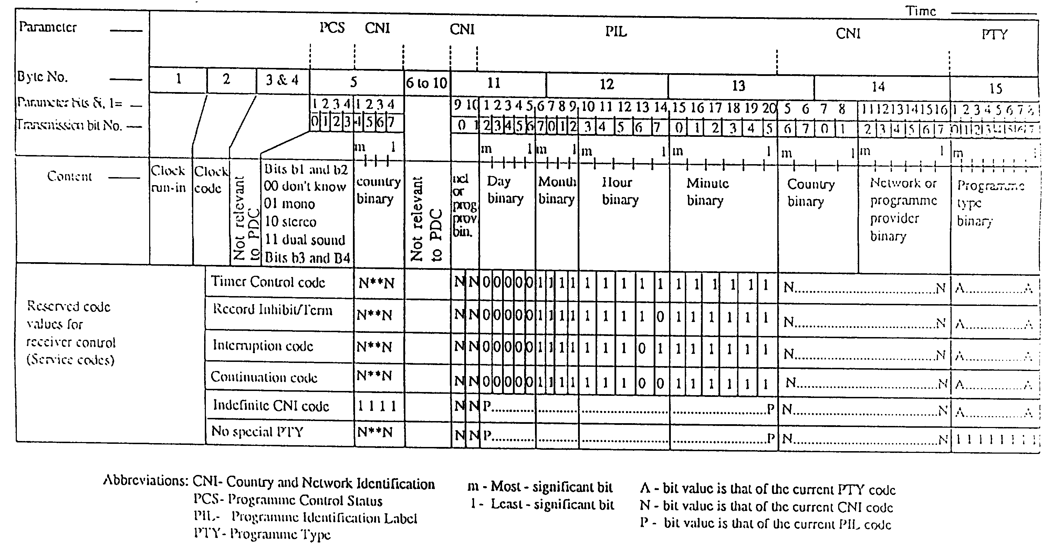

In the case of line 16 (fig.3), it is noted that only two free bit in the PCS exist. For reasons of conformity, therefore, it is preferable to exploit one of the two bit (o both, if the introduction of a superabundance is desired). More precisely, the PCS is composed of 4 bit, of which the first two identify the type of sound (mono, stereo, double audio), and the other two, are in fact free.

It is supposed the use, for identifying the publicity insert, of a third bit in the PCS. It would be easy to say: the bit has the value 1 when the publicity is present and the value 0 when it is absent. A receiver being appropriately equipped would be able to read this bit and exclude the publicity. But the broadcasters, once again, would not use this possibility inasmuch the users would be able to, upon buying an appropriate recorder, elude the publicity inserts.

This solution is not therefore of a practical actuation.

It is herein proposed to crypt the bit that identifies the publicity insert (that from here on shall be called bit P); in other terms the value 1 will only indicate in certain moments the presence of publicity, while in others it will have the opposite significance. Only those in possession of the decrypting "key", that is to say only those in the knowledge of the laws with which the significance of the bit in question changes, will be able to use the service.

A first way of crypting the bit P could be the following.

A table is defined in which, for every day, the time intervals are delimited in which the bit P assumes the significance of the presence of publicity if it has the value 1. For example the day 2/3/1992, during the morning the intervals can be from 8 to 8.15, from 8.27 to 8.31, from 8.45 to 9.20, etc. It is clear that in the complementary intervals the bit has the opposite significance.

Cards have recently been realised having the form of a credit card, that contain a microprocessor with an annexed RAM and ROM.

Such cards are inserted in a slot of an appliance and, by way of electrical contacts situated on the edge, messages can be exchanged with the microprocessor of the appliance; for major details attention is drawn for instance to the article "Carte Intelligenti" by S. Cazzani, Elettronica Oggi, N. 90 of 15-11-89, pages 44-56; or also to the French patent application N. 2 641 395 and 2 646 260.

In the present case the card could incorporate an I.C. of the type ST16XYZ by S.G.S. Thomson, and the reader a microcontroller by Motorola, of the type 68HC05B6, the card could moreover be advantageously in line with the ISO 7816 Standard.

A video recorder or a television according to the invention, equipped with such a card reader, could read appropriate cards, made commercially available, containing within their ROM the table of significances of P for the duration of an established period, for example a week. The user that wishes to take advantage of the service of cancelling the publicity inserts, buys a card, inserts it in the reader of the receiver. Upon the moment of use, the microprocessor of the receiver communicates to that of the card the date and time (that could be deduced by the packet 8/30 format 1, or by line zero of any Televideo page, or by a clock incorporated in the receiver), and the instantaneous value of the bit P. The microprocessor of the card, comparing the date and time with that of the table that it has in its ROM, would return to the microprocessor of the receiver the instantaneous significance of the bit P.

Alternately the bit P could be crypted as follows.

As packets 8/30 format 2 are transmitted at regular intervals (typically one a second) as is the case with the signal of line 16 (25 times a second), the bit P can constitute a sequence of the type 11111111111111110000000000000000111111111111.... This sequence can be crypted by making the EXOR (OR exclusive) with a sequence being pseudo-casual. In this case in the card the actual pseudo-casual sequence is memorised, or its generation "key". Obviously said pseudo-casual sequence is changed at regular intervals.

Even in this case a temporary synchronisation is necessary: in other terms it must be defined exactly the instant of starting the pseudo-casual sequence, that will then be regularly repeated. As temporary markers also in this case the packets 8/30 format 1 are useful, in that they are transmitted exactly every second; the synchronisation is however more critical than in the previous case, in that even the slipping of a single bit would not allow for decrypting correctly the message.

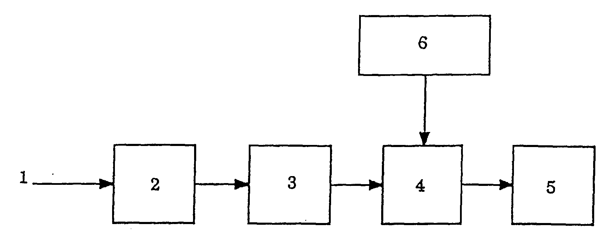

In figure 4 the block diagram of a part of the receiver of television signals according to the invention is represented.

The given diagram is an example that refers to the case of obtaining bit P crypted from the packet 8/30 format 2 inserted in the teletext signal.

In figure 4 reference number 1 indicates the received television signal; reference number 2 indicates the block of the circuits for selection, amplification and detection of the signal itself, at the output of block 2 the composite video signal is present that arrives to the successive block 3, which represents a teletext signal extractor of the known type, being part of a normal teletext decoder; for example particularly adapted for the necessity could be the SAA 4700 circuit by Philips, provided in fact for the extracting and decoding of the data contained in line 16 of the video signal.

With reference number 4 a control unit of the receiver is indicated; the control unit 4 in a preferred version of the invention contains a microprocessor, of the type normally utilised in television receivers, for example of the type 8032 by Philips.

The control unit 4 receives from the teletext signal extractor 3 the packet 8/30 format 2, containing the third bit of the byte 14, i.e. the bit P of interest; the unit 4 also receives time and date information, contained in line zero of any teletext page.

Reference number 5 indicates the actual recorder, of the usual cassette type; the recorder 5 receives instructions from the control circuit 4.

Reference number 6 finally indicates a card reader, being of the intelligent type as previously mentioned; said reader is connected by way of a bus to the control unit 4; as mentioned the card, that the user will have introduced into the reader 6, also contains a microprocessor, which within its ROM, contains a table that supplies, for every date and time, the significance of bit P contained in the television signal.

Whereas the microprocessor of the unit 4 periodically communicates, for example every second, date, time and value of bit P to the microprocessor of the card contained in the reader; the microprocessor of the card compares the value of bit P in its table and supplies the significance, i.e. the decrypted value, to the microprocessor of the unit 4.

Therefore the unit 4 knows whether the transmission in act at that moment is or not a publicity insert and is able to communicate appropriate commands to the recorder 5, stopping it in the event of publicity and reactivating it in the case it is inoperative and there is no publicity.

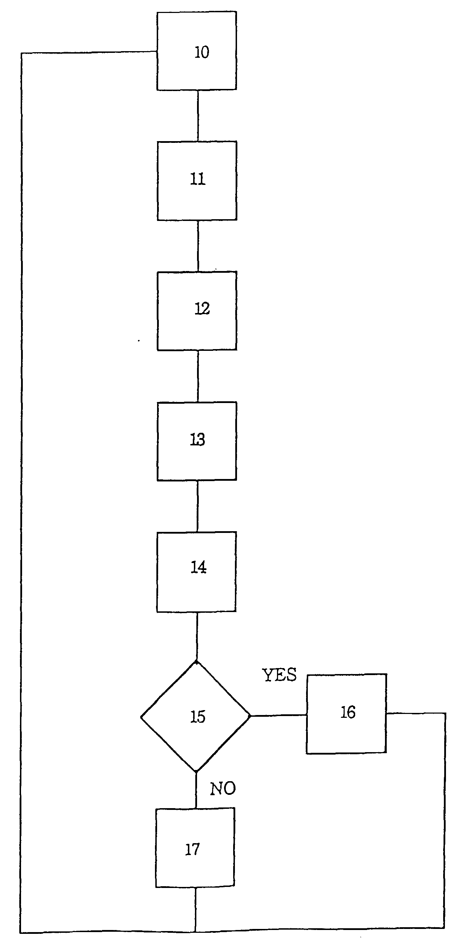

For a clearer understanding in figure 5 the logic flow is represented of the operations carried out by the microprocessor of the receiver according to the invention.

With the reference number 10 the starting block of the control loop of bit P is represented.

Block 10 passes control to the successive block 11, which provides for reading in the line zero of a received teletext page the date and time; the instant in which the time changes, i.e. the second moves, it passes control to the successive block 12; block 12 provides for reading the value of bit P, and passes control to the successive block 13; block 13 provides for transmitting to the microprocessor of the card the read data (date, time value of P); control is then passed to successive block 14.

Block 14 provides for awaiting the reply of the microprocessor of the card; as soon as this occurs it passes control to successive block 15.

Block 15 is a control block, it verifies whether the decrypted value of bit P signifies that a publicity insert is taking place; in the affirmative case control is passed to block 16, in the negative case control is passed to block 17.

Block 16 controls as to whether the recorder is recording, and in such case it is made to stop (it is placed in PAUSE); control is then passed back to block 11.

Block 17 controls as to whether the recorder is inoperative, and, in the affirmative case, it restarts it; control is then passed back to block 11.

The characteristics of the system described result in being clear from the present description and annexed drawings.

From the present description the advantages of the system subject of the present invention also result in being clear.

In particular they are represented by the fact that the exclusion is made possible, upon payment, of publicity inserts from television recordings.

It is clear that numerous variants are possible by the skilled man, to the system and to the devices described as an example, without however departing from the novelty principles inherent in the invention; for example instead of a card with a microprocessor a normal passive card of the magnetic type could be utilised, on which the instantaneous significance is recorded of the bit P; in this case the microprocessor of the receiver could charge in its memory the table of the card and then it could go on to do the decrypting.

As previously mentioned the receiver could be either a video recorder or a television; in this case the signal of the presence of publicity could for example command momentary skip to another established program, or the automatic selection of the teletext function, with the associated "muting".

Or it could be the television set to stop and restart the video recorder to which it is connected and to which it is predisposed.

It is obvious that the table could be memorised on any other support, or even communicated by way of telephone to the user, as is already known in other cases of pay TV.

## Claims

1. Method for the transmission and reception of television signals, wherein in the television signal during publicity inserts coded information is inserted according to a determined secret code so that only receivers equipped with suitable decoders are able to detect said code and consequently activate one or more specific functions, characterized in that
- said coded information is represented by a bit;
- said bit (P) is a free bit of a series of bits (PCS) included in a control byte (14);
- said bit (P) is encrypted,
- said decoder is predisposed to receive a card that contains the information relative to said secret code.

2. Method for the transmission and reception of television signals, according to claim 1, characterised in that said bit (P) is timely encrypted, i.e. its value 1 has a positive significance during determined intervals of time and has a negative significance during other intervals of time, and that its value 0 has an opposite significance.

3. Method for the transmission and reception of television signals, according to claim 1, characterised in that said card contains an integrated circuit and an electronic memory.

4. Method for the transmission and reception of television signals, according to claim 1, characterised in that said card contains a magnetic type memory.

5. Method for the transmission and reception of television signals, according to claim 1, characterised in that said card contains the times with the intervals of times in which said bit (P) has a positive significance when its value is 1 and the intervals in which said bit (P) has a negative significance when its value is 1.

6. Method for the transmission and reception of television signals, according to claim 1, characterised in that said bit (P) is transmitted according to a sequence of 1 and 0, encrypted making the OR exclusive with a pseudo casual secret sequence.

7. Method for the transmission and reception of television signals, according to claim 6, characterised in that said card contains said pseudo casual secret sequence.

8. Method for the transmission and reception of television signals, according to claim 2, characterised in that the said decoder deduces the time from line zero of a teletext page.

9. Method for the transmission and reception of television signals, according to claim 6, characterised in that said decoder utilises for synchronising the beginning of said sequence of 1 and 0 the packets 8/30 format 1.

10. Method for the transmission and reception of television signals, according to claim 3, characterised in that said card contains a microprocessor, that provides for carrying out the decrypting operation and to communicate the result to the receiver.

11. Method for the transmission and reception of television signals, according to claim 4, characterised in that the receiver contains a microprocessor, that provides for carrying out the reading of the information contained in the card and the decrypting operation.

12. Method for the transmission and reception of television signals, according to one or more of the previous claims, characterised in that the receiver, once established that the running transmission is a publicity insert, provides for stopping a recording function, and for restarting it once again as soon as said publicity insert has finished.

13. Method for the transmission and reception of television signals, according to one or more of the previous claims from 1 to 11, characterised in that the receiver, once established that the running transmission is a publicity insert, provides for activating a passage to the teletext function, and to activate the "muting" function; as soon as said publicity insert has finished it then provides for restoring the primitive reception.

14. Method for the transmission and reception of television signals, according to one or more of the previous claims from 1 to 11, characterised in that the receiver, once established that the running transmission is a publicity insert, provides for activating the passage to another television channel established by the user; as soon as the publicity insert has finished it then provides for restoring the primitive reception.

15. Method for the transmission and reception of television signals, according to claim 1, characterised in that said secret code is communicated to said decoder by way of a suitable memory support, or by way of telephone.

16. Apparatus for the transmission and the reception of television signals according to the method of claim 1, wherein means are provided on the transmitting side for inserting in the television signal during publicity inserts coded information according to a determined secret code and on the receiver side suitable decoding means are provided able to detect said code and consequently activate one or more specific functions, characterised in that:
- on the transmitting side means are provided for inserting in the television signal during publicity inserts an encrypted bit (P) which represents said coded information and is a free bit of a series of bits (PCS) included in a control byte (14);
- on the receiving side said decoding means are predisposed to receive a card that contains the information relative to said secret code.

## Patentansprüche

1. Verfahren für die Übertragung und den Empfang eines Fernsehsignals, wobei in dem Fernsehsignal während Werbeeinblendungen codierte Information eingefügt wird, gemäß einem vorbestimmten geheimen Code, so daß nur Empfänger, die mit passenden Decodern ausgerüstet sind, in der Lage sind, diesen Code zu erkennen, und somit ein oder mehrere bestimmte Funktionen aktivieren können, dadurch gekennzeichnet, daß
- die codierte Information durch ein Bit repräsentiert wird;
- das Bit (P) ein freies Bit einer Serie von Bits (PCS) ist, die in einem Kontrollbyte (14) enthalten sind;
- wobei das Bit (P) verschlüsselt wird;
- wobei der Decoder ausgerüstet ist, um eine Karte aufzunehmen, die die mit dem geheimen Code in Beziehung stehende Information enthält.

2. Verfahren für die Übertragung und den Empfang eines Fernsehsignals nach Anspruch 1,
dadurch gekennzeichnet, daß das Bit (P) zeitlich verschlüsselt wird, d.h. daß sein Wert 1 eine positive Signifikanz während eines bestimmten Zeitintervalls aufweist, und eine negative Signifikanz während eines anderen Zeitintervalls aufweist, und daß sein Wert O eine entgegengesetzte Signifikanz aufweist.

3. Verfahren für die Übertragung und den Empfang eines Fernsehsignals nach Anspruch 1,
dadurch gekennzeichnet, daß die Karte eine integrierte Schaltung und einen elektronischen Speicher aufweist.

4. Verfahren für die Übertragung und den Empfang eines Fersehsignals nach Anspruch 1,
dadurch gekennzeichnet, daß die Karte einen Speicher vom magnetischen Typ aufweist.

5. Verfahren für die Übertragung und den Empfang eines Fernsehsignals nach Anspruch 1,
dadurch gekennzeichnet, daß die Karte die Zeiten mit den Zeitintervallen enthält, in denen das Bit (P) eine positive Signifikanz aufweist, wenn sein Wert 1 ist, und die Intervalle enthält, in welchem das Bit (P) eine negative Signifikanz aufweist, wenn sein Wert 1 ist.

6. Verfahren für die Übertragung und den Empfang eines Fernsehsignals nach Anspruch 1,
dadurch gekennzeichnet, daß das Bit (P) gemäß einer Sequenz von 1 und 0 übertragen wird, wobei die Verschlüsselung einer Exklusiv- oder Verknüpfung mit einer pseudozufälligen geheimen Sequenz herstellt.

7. Verfahren für die Übertragung und den Empfang eines Fernsehsignals nach Anspruch 6,
dadurch gekennzeichnet, daß die Karte die pseudozufällige geheime Sequenz aufweist.

8. Verfahren für die Übertragung und den Empfang eines Fernsehsignals nach Anspruch 2,
dadurch gekennzeichnet, daß der Decoder die Zeit von der Nullinie einer Teletextseite ableitet.

9. Verfahren für die Übertragung und den Empfang eines Fernsehsignals nach Anspruch 6,
dadurch gekennzeichnet, daß der Decoder für die Synchronisierung des Anfangs der Sequenz aus 1 und 0 die Pakete 8/30 Format 1 verwendet.

10. Verfahren für die Übertragung und den Empfang eines Fernsehsignals nach Anspruch 3,
dadurch gekennzeichnet, daß die Karte einen Mikroprozessor enthält, der dafür sorgt, daß die Entschlüsselungsoperation ausgeführt wird, und der dafür sorgt, daß das Ergebnis dem Empfänger mitgeteilt wird.

11. Verfahren für die Übertragung und den Empfang eines Fernsehsignals nach Anspruch 4,
dadurch gekennzeichnet, daß der Empfänger einen Mikroprozessor enthält, der dafür sorgt, daß das Lesen der in der Karte enthaltenen Information und die Entschlüsselungsoperation ausgeführt werden.

12. Verfahren für die Übertragung und den Empfang eines Fernsehsignals nach einem oder mehreren der vorstehenden Ansprüche,
dadurch gekennzeichnet, daß der Empfänger dann, wenn einmal etabliert wurde, daß die laufende Übertragung eine Werbeeinblendung ist, dafür sorgt, daß eine Aufzeichnungsfunktion gestoppt wird, und daß sie wiederum gestartet wird, sobald die Werbeeinblendung beendet ist.

13. Verfahren für die Übertragung und den Empfang eines Fernsehsignals nach einem der Ansprüche 1 bis 11,
dadurch gekennzeichnet, daß der Empfänger dann, wenn einmal festgestellt wurde, daß die laufende Übertragung eine Werbeeinblendung ist, dafür sorgt, daß zu der Teletextfunktion gewechselt wird, und daß die "Muting"-Funktion aktiviert wird; sobald die Werbeeinblendung beendet ist, sorgt er dafür, daß der normale Empfang wieder hergestellt wird.

14. Verfahren für die Übertragung und den Empfang eines Fernsehsignals nach Anspruch 11,
dadurch gekennzeichnet, daß der Empfänger dann, wenn einmal festgestellt ist, daß die laufende Übertragung eine Werbeeinblendung ist, dafür sorgt, daß zu einem anderen Fernsehkanal, welcher von dem Benutzer etabliert wurde, gewechselt wird; sobald die Werbeeinblendung beendet ist, sorgt er dafür, daß der normale Empfang wieder hergestellt wird.

15. Verfahren für die Übertragung und den Empfang eines Fernsehsignals nach Anspruch 1,
dadurch gekennzeichnet, daß der Geheimcode dem Decoder mittels einer passenden Speicherunterstützung oder über das Telefon mitgeteilt wird.

16. Vorrichtung für die Übertragung und den Empfang von Fernsehsignalen gemäß dem Verfahren nach Anspruch 1,
wobei Mittel auf der übertragenden Seite vorgesehen sind zum Einfügen codierter Information gemäß einem vorbestimmten Geheimcode in das Fernsehsignal während Werbeeinblendungen, und auf der Empfangsseite passende Decodiermittel vorgesehen sind, die in der Lage sind, den Code zu erfassen und anschließend eine oder mehrere bestimmte Funktionen zu aktivieren, dadurch gekennzeichnet, daß:
- auf der übertragenden Seite Mittel vorgesehen sind zum Einfügen eines verschlüsselten Bit (P) in das Fernsehsignals während Werbeeinblendungen, welches Bit die codierte Information repräsentiert, und welches ein freies Bit einer Serie von Bits (PCS) ist, die in einem Kontrollbyte (14) eingeschlossen ist;
- auf der Empfangsseite die Decodiermittel ausgestattet sind, um eine Karte aufzunehmen, die die mit dem Geheimcode in Beziehung stehende Information enthält.

## Revendications

1. Un procédé pour l'émission et la réception de signaux de télévision, dans lequel, dans le signal de télévision, lors des pauses publicitaires, on insère des informations codées en correspondance à un code secret déterminé de sorte qu'uniquement des récepteurs équipés d'un décodeur adéquat soient capables de détecter ledit code et en conséquence d'activer une ou plusieurs fonctions spécifiques, caractérisé en ce que:
- lesdites informations codées sont représentées par un bit;
- ledit bit (P) est un bit libre d'une série de bits (PCS) faisant partie d'un octet de contrôle (14);
- ledit bit (P) est crypté;
- ledit décodeur est prévu pour recevoir une carte contenant les informations relatives audit code secret.

2. Procédé pour l'émission et la réception de signaux de télévision selon la revendication 1, caractérisé en ce que ledit bit (P) est crypté en fonction du temps, c'est-à-dire que sa valeur 1 a une signification positive lors d'intervalles de temps prédéterminés et une signification négative pendant d'autres intervalles de temps et que sa valeur 0 a une signification opposée.

3. Procédé pour l'émission et la réception de signaux de télévision selon la revendication 1, caractérisé en ce que ladite carte contient un circuit intégré et une mémoire électronique.

4. Procédé pour l'émission et la réception de signaux de télévision selon la revendication 1, caractérisé en ce que ladite carte contient une mémoire de type magnétique.

5. Procédé pour l'émission et la réception de signaux de télévision selon la revendication 1, caractérisé en ce que ladite carte contient les instants pour les intervalles de temps pendant lesquels ledit bit (P) a une signification positive lorsque sa valeur est (1) et les intervalles pendant lesquels le bit (P) a une signification négative lorsque sa valeur est 1.

6. Procédé pour l'émission et la réception de signaux de télévision selon la revendication 1, caractérisé en ce que ledit bit (P) est émis en correspondance à une séquence de 1 et de 0, crypté par l'application d'une fonction OU exclusive avec une séquence secrète pseudo aléatoire.

7. Procédé pour l'émission et la réception de signaux de télévision selon la revendication 6, caractérisé en ce que ladite carte contient ladite séquence secrète pseudo aléatoire.

8. Procédé pour l'émission et la réception de signaux de télévision selon la revendication 2, caractérisé en ce que ledit décodeur calcule le temps à partir de la ligne zéro d'une page télétext.

9. Procédé pour l'émission et la réception de signaux de télévision selon la revendication 6, caractérisé en ce que ledit décodeur utilise, pour la synchronisation du début de ladite séquence de 1 et de 0, les paquets 8/30 format 1.

10. Procédé pour l'émission et la réception de signaux de télévision selon la revendication 3, caractérisé en ce que ladite carte contient un microprocesseur qui assure l'opération de décryptage et la communication du résultat au récepteur.

11. Procédé pour l'émission et la réception de signaux de télévision selon la revendication 4, caractérisé en ce que le récepteur contient un microprocesseur, assurant la lecture des informations contenues dans la carte ainsi que l'opération de décryptage.

12. Procédé pour l'émission et la réception de signaux de télévision selon l'une ou plusieurs des revendications précédentes, caractérisé en ce que le récepteur, dès qu'il est déterminé que l'émission en cours est une pause publicitaire, permet d'arrêter une fonction d'enregistrement et de la relancer de nouveau une fois ladite pause publicitaire terminée.

13. Procédé pour l'émission et la réception de signaux de télévision selon l'une quelconque des revendications 1 à 11, caractérisé en ce que le récepteur, dès qu'il est déterminé que l'émission en cours est une pause publicitaire, permet d'activer le passage vers une fonction télétext, avec activation de la fonction de coupure du son; et dès que ladite pause publicitaire est terminée, assure le retour à la réception d'origine.

14. Procédé pour l'émission et la réception de signaux de télévision selon l'une ou plusieurs des revendications 1 à 11, caractérisé en ce que le récepteur, dès qu'il est déterminé que l'émission en cours est une pause publicitaire, permet d'activer le passage à une autre chaîne de télévision déterminée par l'utilisateur; et dès que la pause publicitaire est terminée, assure le retour à la réception d'origine.

15. Procédé pour l'émission et la réception de signaux de télévision selon la revendication 1, caractérisé en ce que ledit code secret est communiqué audit décodeur au moyen d'un support de mémoire adéquat ou par téléphone.

16. Dispositif pour l'émission et la réception de signaux de télévision selon le procédé de la revendication 1, dans lequel sont prévus, du côté émetteur, des moyens pour insérer dans le signal de télévision, pendant les pauses publicitaires de l'information codée selon un code secret déterminé et dans lequel sont prévus du côté récepteur des moyens de recodage appropriés et qui sont capables de détecter ledit code et en conséquence d'activer une ou plusieurs fonctions spécifiques, caractérisé en ce que :
du côté émetteurs sont prévus des moyens pour insérer dans le signal de télévision pendant les pauses publicitaires un lit crypté (P) qui représente ladite information codée et qui constitue un bit libre d'une série de bits (PCS) inclus dans un octet (14) de contrôle (14);
et en ce que du côté récepteur lesdits moyens de décodage sont disposés à l'avance pour recevoir une carte qui contient l'information relative audit code secret.
